# EUROPÄISCHE PATENTSCHRIFT

(11) **EP 0 688 960 B1**
(45) Veröffentlichungstag und Bekanntmachung des Hinweises auf die Patenterteilung: **03.01.1996**
(21) Anmeldenummer: 94107522.8
(22) Anmeldetag: 15.05.1994
(51) Int. Cl.: F16B 1/00, F16B 31/02

(54) **Abreisskopfschraube**
Bolt with shearable head
Boulon à tête frangible

(43) Veröffentlichungstag der Anmeldung: 27.12.1995
(73) Patentinhaber: Petri, Manfred, Dr., D-95032 Hof/Saale (DE)
(72) Erfinder: Petri, Manfred, Dr., D-95032 Hof/Saale (DE)
(74) Vertreter: Strobel, Wolfgang, Dipl.-Ing.

(56) Entgegenhaltungen:
- EP-A- 0 470 388
- US-A- 4 874 275

## Beschreibung

Die vorliegende Erfindung betrifft eine Abreißkopfschraube, nach dem Oberbegriff des Anspruchs 1.

Abreißkopfschrauben finden heutzutage beispielsweise Anwendung beim Einsatz in Schraubverbindern oder Schraubkabelschuhen zum Festklemmen von Kabeln oder Leitungen.

Aus der EP-A-0 470 388 ist eine Abreißkopfschraube bekannt, mit einem Außengewindeabschnitt, einem Kopfabschnitt, einem eine Sollbruchstelle bildenden Verjüngungsabschnitt, der zwischen dem Außengewindeabschnitt und dem Kopfabschnitt vorgesehen ist, sowie einem einen Klemmkontakt ermöglichenden Endabschnitt.

Der Außengewindeabschnitt wird dabei in einen entsprechenden Innengewindeabschnitt eines Schraubverbinders oder Schraubkabelschuhs eingeschraubt, in den ein Leiter eingesteckt ist, der mit der Abreißkopfschraube geklemmt werden soll.

Um hierbei ein definiertes Anzugsmoment in Übereinstimmung mit entsprechenden Vorschriften zu gewährleisten, weist die Abreißkopfschraube einen Sollbruchbereich mittels eines vorbestimmten Querschnitts auf, durch den bei einem vorbestimmten Anzugsmoment, das auf den Kopfabschnitt aufgebracht wird, dieser von dem Gewindeabschnitt wegbricht.

So kann mit der Abreißkopfschraube des genannten Standes der Technik ein entsprechend zufriedenstellendes Ergebnis zum Klemmen der entsprechenden Leiter erreicht werden.

Die mit Schraubverbindern oder Schraubkabelschuhen verbundenen einzelnen Leiter haben jedoch die unterschiedlichsten Größen, je nach entsprechender Übertragungsleistung und/oder Festigkeit des Leiters. Dies bedeutet, daß eine Vielzahl von verschiedenen Schraubverbindern benötigt wird, die ihrerseits wiederum in ihren Abmessungen unterschiedliche Abreißkopfschrauben benötigen. Aufgrund der Vielzahl der Abreißkopfschrauben ergeben sich höhere Kosten für jede einzelne Schraube und Probleme im Bereich der Anwendungssicherheit, da eine erhöhte Verwechslungsgefahr der Schrauben vorhanden ist.

Der vorliegenden Erfindung liegt deshalb die Aufgabe zugrunde, das obengenannte Problem zu verringern und eine Abreißkopfschraube zu schaffen, die für unterschiedliche Querschnitte und/oder Festigkeiten des zu klemmenden Elements, insbesondere des zu klemmenden Leiters einsetzbar ist.

Diese Aufgabe wird durch den Gegenstand des Patentanspruchs 1 gelöst.

Erfindungsgemäß wird somit eine Gewindehülse vorgesehen, die sich zumindest teilweise entlang des Außengewindeabschnitts erstreckt und ihrerseits ein Außengewinde aufweist.

Mit der vorgeschlagenen Abreißkopfschraube wird vorteilhafterweise erreicht, daß diese über einen weiten Bereich von Querschnitten zu klemmender Leiter, oder ganz allgemein zu klemmender Bauteile insbesondere auch unterschiedlicher Festigkeiten in einem entsprechenden Verbindungselement mit definiertem Anzugsmoment geklemmt werden können, so daß die bisherige Vielzahl von im Durchmesser unterschiedlichen Abreißkopfschrauben erheblich verringert werden kann.

Dadurch, daß die Gewindehülse sich auch um den radialen Außenumfang des Endabschnitts erstreckt, wird eine besonders gute Führung des Endabschnitts erreicht. Dabei wird insbesondere vorteilhafterweise eine Verkürzung der Gesamtlänge der Abreißkopfschraube erreicht, da sich der Endabschnitt größtenteils in der Gewindehülse befindet. Dies ist insbesondere dann von Vorteil, wenn die Differenz zwischen innerer Bohrung des Verbinders und dem Außendurchmesser des zu verklemmenden Elements gering ist, so daß ein Hineinragen des beispielsweise balligen Endabschnittes in die Ausnehmung des Schraubverbinders oder Schraubkabelschuhs das Einführen eines größeren zu klemmenden Elements behindern würde.

Um bei einer ersten bevorzugten Ausführungsform ein sicheres Einschrauben der Abreißkopfschraube in das Verbindungselement zu gewährleisten, wird eine Drehmitnahme der Gewindehülse dadurch erreicht, daß diese im vormontierten Zustand drehfest bzw. drehblockiert am Außengewindeabschnitt angeordnet ist. Beim Einschrauben wird somit sichergestellt, daß sich die Gewindehülse zusammen mit dem Außengewindeabschnitt der inneren Schraube mitdreht.

Gemäß einer bevorzugten Ausführungsform der erfindungsgamäßen Abreißkopfschraube ist der Endabschnitt, der zur Anlage an das zu klemmende Element, insbesondere an den elektrischen Leiter, dient, ballig ausgeführt. Alternativ kann er auch trapezförmig ausgebildet sein. Weiterhin ist es auch möglich ihn insbesondere für ein Klemmen großer und/oder stark verdichteter Leiter nadelförmig bzw. mit einer Spitze auszubilden.

In einer Ausführungsform der erfindungsgemäßen Abreißkopfschraube läßt sich diese aufgrund der Ausbildung des Verbindungselements jedoch nur bis zu einem vorbestimmten Maß einschrauben, wonach eine Arretierung der Gewindehülse aufgrund des sich wieder verjüngenden Querschnitts der Innenausnehmung des Verbindungselements erfolgt. Danach kann durch weiteres Hineindrehen der inneren Schraube der Klemmabschnitt weiter in den Verbinder bzw. das Verbindungselement hineingeschraubt werden und somit auch im Querschnitt erheblich kleinere Leiter klemmen.

In einer ebenfalls bevorzugten Ausführungsform weist die Gewindehülse eine Anschlageinrichtung auf, die an dem dem Kopfabschnitt zugewandten Endbereich vorgesehen ist.

Vorteilhafterweise ist die Anschlageinrichtung als ein kappenartiger Vorsprung ausgebildet, der über den Außenumfang des Außengewindes der Gewindehülse vorspringt. Dabei kann sich der kappenartige Vorsprung über den gesamten Umfang der Gewindehülse erstrecken oder unterbrochen sein. In einer Ausführungsform kann die Anschlageinrichtung als ein nasenartiger Vorsprungsbereich ausgebildet sein.

Vorteilhafterweise weist die Gewindehülse einen inneren Anschlagabsatz auf, mit dem ein Drehblockieren durch ein entsprechendes Anzugsmoment auf einfache Weise erzeugt werden kann.

Um ein sicheres und einfaches Eindrehen der Schraube zu ermöglichen, ist im Kopfabschnitt, im Verjüngungsabschnitt und im Außengewindeabschnitt eine Innenausnehmung ausgebildet. Diese kann vorteilhafterweise als Innensechskant ausgebildet sein, so daß mit entsprechend genormten Sechskantschlüsseln ein Einschrauben der Abreißkopfschraube ermöglicht wird und die Übertragung des entsprechenden Anzugsmoments mit demselben Werkzeug erfolgen kann, wobei bei Überschreiten des von der Abreißkopfschraube aufnehmbaren Anzugsmoments der Kopfabschnitt entsprechend abgetrennt wird.

Vorteilhafterweise ist im Bereich des Außengewindeabschnitts der Querschnitt der Innenausnehmung geringer als im Bereich des Kopfabschnitts, so daß sichergestellt wird, daß unter der Voraussetzung der Verwendung des richtigen Sechskantschlüssels, beim Anziehen der Schraube nur der Kopfabschnitt beaufschlagt wird und somit abreißen kann. Danach ist es möglich, aufgrund des verbleibenden Innensechskants die Schraube wieder zu lösen.

In einer einfachen bevorzugten Ausführungsform weist die Abreißkopfschraube nur eine Gewindehülse auf, die eine axiale Erstreckung hat, die im wesentlichen der axialen Erstreckung des Außengewindeabschnitts entspricht.

Darüber hinaus kann die Wandstärke der Gewindehülse über einen gewissen Bereich geändert werden, so daß dadurch unterschiedliche Außendurchmesser der gesamten Schraube erzielt werden können, wodurch eine Anpassung an unterschiedliche Innendurchmesser von Gewindebohrungen in den jeweiligen Verbindern oder Verbindungselementen ermöglicht wird.

In einer zweiten bevorzugten Ausführungsform weist die Gewindehülse ihrerseits ebenfalls einen Kopfabschnitt und einen, zwischen Gewindehülse und Kopfabschnitt vorgesehenen Verjüngungsbereich auf.

Dies ergibt somit eine "Doppelschraube" wodurch besonders vorteilhafterweise einerseits durch die äußere Schraube ein hohes Anzugsmoment für einen großen und/oder harten Leiter erzeugt werden kann, und mit der Innenschraube kleinere und/oder weichere Leiter entsprechend geklemmt werden können.

Hierzu ist die Abreißkopfschraube weiterhin so ausgestaltet, daß der Kopfabschnitt der Gewindehülse den Kopfabschnitt der mit dem Außenabschnitt der Innenabreißkopfschraube verbunden ist, umgibt. Weiterhin ist vorteilhafterweise eine Innenausnehmung im Kopfabschnitt der Gewindehülse vorgesehen, die in einer weiteren bevorzugten Ausführungsform als Innensechskant ausgebildet sein kann. Damit kann auch der Kopfabschnitt der Gewindehülse mit einem entsprechenden Sechskantschlüssel in die entsprechende Gewindebohrung eines Verbinders eingeschraubt werden.

Alternativ weist der Kopfabschnitt eine Sechskant-Außenkontur auf, die mit entsprechenden Werkzeugen ergriffen werden kann.

Der Querschnitt der Innenausnehmung des Kopfabschnitts der Gewindehülse wird bevorzugt größer gewählt als der Querschnitt der Innenausnehmung der inneren Schraube, wodurch sichergestellt wird, daß mit dem jeweiligen Werkzeug nur eine der beiden Schrauben angezogen werden kann. Aufgrund der Ausbildung als Doppelschraube kann der Innensechskant der inneren Schraube ebenfalls nicht mehr abgestuft ausgebildet werden, wobei die Vorteile bei abgestufter Ausbildung erhalten bleiben. Die ungestufte Ausbildung stellt ersichtlich eine fertigungstechnische Vereinfachung dar.

Alternativ kann der Querschnitt der Innenausnehmung des Kopfabschnitts der Gewindehülse auch geringer gewählt werden als der Querschnitt der Innenausnehmung der inneren Schraube, was vorteilhafterweise sicher verhindert, daß die Innenschraube mit dem Werkzeug für die Außenschraube betätigt werden kann.

Vorteilhafterweise weist die Gewindehülse ebenfalls einen in axialer Richtung wirkenden Anschlagbereich auf, der in eine die Drehung der Gewindehülse begrenzende Anlage an den Endabschnitt bringbar ist. Dadurch wird eine entsprechende Kraftübertragung von der Gewindehülse auf den Endabschnitt zum Klemmen der großen Leiter sichergestellt.

Weiterhin wird vorteilhafterweise im maximal eingeschraubten Zustand der inneren Schraube in die äußere Schraube der innere Verjüngungsbereich so angeordnet, daß er sich im Bereich des äußeren Verjüngungsbereichs befindet, wodurch eine entsprechend definierte Abreißoberfläche definiert wird.

Vorteilhafterweise weisen der Außengewindeabschnitt der Innenschraube und das äußere Gewinde der Gewindehülse unterschiedliche Steigungen auf, wobei die Steigung des Außengewindes der Gewindehülse größer ist als die Steigung des Außengewindeabschnitts der Innenschraube, wodurch entsprechend höhere Wirkkräfte auf das zu klemmende Element übertragen werden können. So wird durch eine geringere Steigung ein höherer Schraubendruck erreicht.

Die vorliegende Erfindung betrifft weiterhin auch allgemein ein Verbindungselement und insbesondere einen Schraubverbinder bzw. einen Schraubkabelschuh, mit einem sich längs erstreckenden rohrförmigen Verbindungsgehäuse, das wenigstens an einer seiner Stirnseiten eine Öffnung für die Aufnahme eines zu verbindenden länglichen Elementes, insbesondere eines elektrischen Leiters in das Verbindungsgehäuse aufweist, wobei in der Seitenwand des Gehäuses wenigstens eine Gewindeöffnung vorgesehen ist, zur Aufnahme einer Klemmschraube. Erfindungsgemäß ist diese Klemmschraube als eine erfindungsgemäße Abreißkopfschraube ausgebildet.

Durch die erfindungsgemäße Ausbildung des Verbinders unter Einsatz der erfindungsgemäßen Abreißkopfschrauben wird vorteilhafterweise erreicht, daß der Verbinder eine wesentlich schlankere und platzsparendere Bauweise erhält, wodurch eine entsprechende Materialeinsparung erreicht wird.

Einzelheiten, Merkmale und Vorteile der vorliegenden Erfindung ergeben sich aus der nachfolgenden Beschreibung unter Bezugnahme auf die Zeichnung.

Darin zeigt:
- Figur 1: im Querschnitt eine erste bevorzugte Ausführungsform der erfindungsgemäßen Abreißkopfschraube, und
- Figur 2: im Querschnitt eine zweite bevorzugte Ausführungsform der erfindungsgemäßen Abreißkopfschraube.

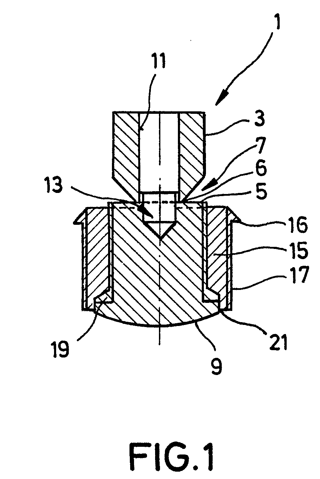

Wie in Figur 1 dargestellt, weist eine erste Ausführungsform einer vorschlagsgemäßen Abreißkopfschraube 1 einen Kopfabschnitt 3, einen Außengewindeabschnitt 5 und einen eine Sollbruchstelle 6 bildenden Verjüngungsabschnitt 7 auf, der zwischen dem Außengewindeabschnitt 5 und dem Kopfabschnitt 3 angeordnet ist.

Am unteren Ende der Abreißkopfschraube 1 ist ein einen Klemmkontakt ermöglichender Endabschnitt 9 vorgesehen.

In dem Kopfabschnitt 3 ist eine Innenausnehmung 11 ausgebildet, die vorzugsweise als Innensechskant ausgebildet sein kann. Die Innenausnehmung 11 erstreckt sich bis in den Außengewindeabschnitt 5 hinein, wobei sich ihr Querschnitt im Bereich 13, der sich im Außengewindeabschnitt 5 befindet, verkleinert. Dadurch wird verhindert, daß ein entsprechendes Werkzeug bis in den Bereich des Außengewindeabschnitts 5 eindringen kann, wodurch verhindert werden würde, daß beim entsprechenden Anziehen der Abreißkopfschraube 1 ein Abreißen des Kopfabschnitts 3 verhindert wird.

Die vorschlagsgemäße Abreißkopfschraube 1 weist weiterhin eine Gewindehülse 15, die ein zum Außengewinde des Außengewindeabschnitts 5 passendes Innengewinde aufweist, und ein Außengewinde 17 auf.

In axialer Richtung weist die Gewindehülse 15 einen Anschlagabsatz 19 auf, der in axiale Anlage an den Endabschnitt 9 gelangen kann, wodurch beispielsweise ein Verklemmen der inneren Schraube mit der Gewindehülse 15 möglich ist, was zu einem Blockieren der Drehung des Außengewindeabschnitts 5 gegenüber der Gewindehülse 15 führt.

Im in der Figur 1 dargestellten unteren Bereich der Gewindehülse 15 erstreckt sich diese auch um den radialen Außenumfang 21 des Endabschnitts 9, wodurch eine entsprechend gute Führung der gesamten Abreißkopfschraube insbesondere bei dem Klemmen großer Leiter erreicht wird. Zusätzlich wird eine entsprechend geringere und schlankere Bauweise der Abreißkopfschraube erreicht.

Im vormontierten Zustand ist die Gewindehülse 15 mit dem Außengewindeabschnitt 5 zumindest so stabil verklemmt, daß beim Einschrauben in eine entsprechende Gewindebohrung eines Verbinders die Gewindehülse 15 mitgenommen wird.

Da die Verbinder oder Schraubverbinder in der Regel einen zylindrischen Außendurchmesser einerseits und eine zylindrische Bohrung zur Aufnahme des zu verbindenden Elements, beispielsweise eines Leiters, aufweisen, ergibt sich, daß die Gewindehülse 15 nicht weiter als bis zur Hälfte des Durchmessers eingeschraubt werden kann, da danach sich in Einschraubrichtung der Querschnitt der inneren Öffnung wieder verjüngt, so daß hier eine entsprechende Anschlagwirkung gegenüber der Gewindehülse 15 vorhanden ist.

Sollte der zu klemmende Gegenstand einen kleineren Querschnitt aufweisen, der nicht bis zur Hälfte des Durchmessers der Innenbohrung reicht, so kann durch entsprechendes Weiterdrehen der inneren Schraube bei feststehender Gewindehülse 15 der Außengewindeabschnitt 5 zusammen mit dem Endabschnitt 9 aus dem drehblockierten Zustand gelöst werden, wodurch der Außengewindeabschnitt 5 zusammen mit dem Kopfabschnitt 3 weiter eingeschraubt werden kann, bis er auf das zu klemmende Element, beispielsweise den Leiter, auftrifft. Danach wird weiterhin eine entsprechende Kraft mittels des in der Innenausnehmung 11 eingesteckten Werkzeugs auf die Abreißkopfschraube 1 ausgeübt, bis der Kopfabschnitt 3 aufgrund der Sollbruchstelle 6 abreißt.

Wie aus Figur 1 ersichtlich weist die vorschlagsgemäße Abreißkopfschraube weiterhin eine als kappenartiger Vorsprung ausgebildete Anschlageinrichtung 16 auf, die an dem dem Kopfabschnitt zugewandten Endbereich der Gewindehülse 15 ausgebildet ist. Beim Einschrauben der Abreißkopfschraube 1 kommt diese Anschlageinrichtung in Anlage an die sie aufnehmende Bohrung, wodurch eine Arretierung der Gewindehülse beim Einschrauben in die Bohrung des Verbindungselements erreicht wird. Danach kann die innere Schraube weiter in Richtung auf das zu klemmende Element geschraubt werden.

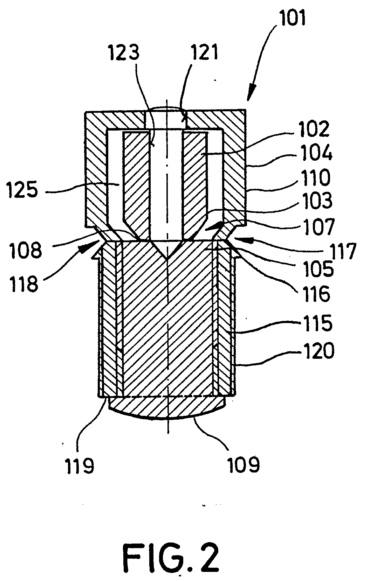

In Figur 2 ist eine zweite Ausführungsform der erfindungsgemäßen Abreißkopfschraube dargestellt. Die Abreißkopfschraube 101 weist eine innere und äußere Abreißkopfschraube 102 bzw. 104 auf.

Die innere Abreißkopfschraube 102, die ähnlich ausgestaltet ist wie die Abreißkopfschraube 1 gemäß Figur 1, weist einen Kopfabschnitt 103 und einen Außengewindeabschnitt 105 auf. Am unteren Ende des Außengewindeabschnitts 105 befindet sich ein einen Klemmkontakt ermöglichender Endabschnitt 109.

Zwischen dem Kopfabschnitt 103 und dem Außengewindeabschnitt 105 ist ein Verjüngungsabschnitt 107 mit einer Sollbruchstelle 108 vorgesehen.

Um den Außengewindeabschnitt 105 erstreckt sich im Gewindeeingriff eine Gewindehülse 115, die an ihrer unteren Stirnseite 119 in axialer Anlage an den Endabschnitt 109 bringbar ist. In Figur 2 ist die Anlagestellung dargestellt. Die Gewindehülse 115, weist ein Außengewinde 120 auf.

Mit der Gewindehülse 115 ist ein Kopfabschnitt 110 verbunden, wobei sich zwischen beiden wiederum ein Verjüngungsbereich 117 mit einer Sollbruchstelle 118 befindet.

Sowohl im Kopfabschnitt 110 als auch im Kopfabschnitt 103 ist jeweils eine Innenausnehmung 121 bzw. 123 vorhanden, die beispielsweise ebenfalls als Innensechskant ausgebildet sein kann.

Wie aus Figur 2 deutlich ersichtlich, ist der Querschnitt der Innenausnehmung 123 deutlich geringer als der Querschnitt der Innenausnehmung 121, so daß ein für den Innensechskant 121 geeignetes Werkzeug nicht in die Innenausnehmung 123 eindringen kann.

Selbstverständlich ist es auch möglich, ein entsprechendes Werkzeug am Kopfabschnitt 110 der äußeren Schraube 104 von außen angreifen zu lassen.

Weiterhin kann alternativ die Innenausnehmung der Innenschraube 102 auch größer ausgebildet werden als die Innenausnehmung der Außenschraube 104.

In der in Figur 2 gezeigten Stellung der Abreißkopfschraube 101 kann diese in einen entsprechenden Verbinder eingeschraubt werden, wobei zunächst die äußere Schraube mit einem in dem Innensechskant 121 eingesetzten Werkzeug, einem Sechskantschlüssel, eingeschraubt wird. Trifft dabei die Abreißkopfschraube 101 das zu klemmende Element, bevor die Gewindehülse 115 anschlägt, so wird diese entsprechend geklemmt und bei Überschreiten eines entsprechenden Anzugsmoments der Kopfabschnitt 110 abgetrennt.

Ähnlich wie die Abreißkopfschraube 1 gemäß Fig. 1 weist die Abreißkopfschraube 101 eine Anschlageinrichtung 116 auf, die als kappenartiger Vorsprung ausgebildet ist.

Schlägt die Stirnseite 119 am entsprechenden Anschlag bzw. mit der Anschlageinrichtung 116 vor Auftreffen des Endabschnitts 109 auf dem zu klemmenden Element, beispielsweise einem elektrischen Leiter, an, so wird zunächst durch weiteres Einwirken auf den Kopfabschnitt der äußeren Schraube 104 deren Kopfabschnitt 110 abgetrennt. Danach wird durch Weiterschrauben der inneren Schraube 102 diese in der äußeren Schraube 104 weiter gedreht, bis der Endabschnitt 109 in Anlage an das zu klemmende Element gelangt. Danach wird bei Überschreiten des entsprechenden Anzugsmoments der Kopfabschnitt 106 der inneren Schraube abgetrennt.

Mittels der vorschlagsgemäßen Abreißkopfschraube 101 ist es somit insbesondere vorteilhaft, daß durch Angriff an der Außenschraube 104 mit einem hohen Anzugsmoment ein großes und/oder hartes zu klemmendes Element geklemmt werden kann, wohingegen mit der Innenschraube 102 kleine und/oder weiche Klemmelemente in angemessener Weise geklemmt werden können.

Die vorliegende Erfindung ist nicht auf die vorbeschriebenen Ausführungsbeispiele begrenzt. So können beispielsweise andere Ausgestaltungen der Kopfabschnitte 3 bzw. 110 vorgenommen werden, beispielsweise durch Ausbildung eines Außensechskants. Weiterhin können durch unterschiedlich starke Gewindehülsen 15 bzw. 115 unterschiedlichste Bohrungen in den Verbindern besetzt werden.

Mit der vorliegenden Erfindung wird somit eine Möglichkeit der Anpassung von Abreißkopfschrauben an unterschiedlichste Querschnitte und/oder Festigkeiten der zu klemmenden Elemente, insbesondere von elektrischen Leitern, geschaffen, wodurch insgesamt die Zahl der unterschiedlichen Abreißkopfschrauben verringert werden kann, was zu entsprechenden Kostenvorteilen führt.

## Patentansprüche

1. Abreißkopfschraube (1, 101) mit einem Außengewindeabschnitt (15, 115), einem Kopfabschnitt (3, 106) und einem eine Sollbruchstelle (6, 118) bildenden Verjüngungsabschnitt (7, 108), der zwischen dem Außengewindeabschnitt und dem Kopfabschnitt vorgesehen ist, sowie einem, einen Klemmkontakt ermöglichenden Endabschnitt (9, 109),
dadurch gekennzeichnet,
daß eine Gewindehülse (15, 115) vorgesehen ist, die sich zumindest teilweise entlang des Außengewindeabschnitts (5, 105) erstreckt und ihrerseits ein Außengewinde (17, 120) aufweist.

2. Abreißkopfschraube nach Anspruch 1, dadurch gekennzeichnet, daß die Gewindehülse (15) sich auch um den radialen Außenumfang (21) des Endabschnitts (9) erstreckt.

3. Abreißkopfschraube nach Anspruch 1 oder 2, dadurch gekennzeichnet, daß im vormontierten Zustand die Gewindehülse (15) drehfest bzw. drehblockiert am Außengewindeabschnitt (5) angeordnet ist.

4. Abreißkopfschraube nach einem der Ansprüche 1 bis 3, dadurch gekennzeichnet, daß die Gewindehülse (15) einen inneren Anschlagabsatz (19) aufweist.

5. Abreißkopfschraube nach einem der Ansprüche 1 bis 4, dadurch gekennzeichnet, daß an dem dem Kopfabschnitt (3, 110) zugewandten Endbereich der Gewindehülse (15, 115) eine Anschlageinrichtung (16, 116) vorgesehen ist.

6. Abreißkopfschraube nach Anspruch 5, dadurch gekennzeichnet, daß die Anschlageinrichtung ein kappenartiger Vorsprung (16, 116) ist, der über den Außenumfang des Außengewindes (17, 120) der Gewindehülse (15, 115) wenigstens teilweise vorspringt.

7. Abreißkopfschraube nach einem der Ansprüche 1 bis 6, dadurch gekennzeichnet, daß im Kopfabschnitt (5), im Verjüngungsabschnitt (7) und im Außengewindeabschnitt (5) eine Innenausnehmung (11, 13) ausgebildet ist.

8. Abreißkopfschraube nach Anspruch 7, dadurch gekennzeichnet, daß die Innenausnehmung (11) als Innensechskant ausgebildet ist.

9. Abreißkopfschraube nach Anspruch 7 oder 8, dadurch gekennzeichnet, daß der Querschnitt der Innenausnehmung (11, 13) im Bereich des Außengewindeabschnitts (5) geringer ist als im Bereich des Kopfabschnitts (3).

10. Abreißkopfschraube nach mindestens einem der Ansprüche 1, 5 oder 6, dadurch gekennzeichnet, daß die Gewindehülse (115) ebenfalls einen Kopfabschnitt (110) und einen Verjüngungsabschnitt (117) aufweist, der zwischen Gewindehülse (115) und Kopfabschnitt (110) vorgesehen ist.

11. Abreißkopfschraube nach Anspruch 10, dadurch gekennzeichnet, daß der Kopfabschnitt (110) der Gewindehülse (115) den Kopfabschnitt (103) der mit dem Außengewindeabschnitt (105) verbunden ist, umgibt.

12. Abreißkopfschraube nach Anspruch 11, dadurch gekennzeichnet, daß der Kopfabschnitt (110) der Gewindehülse (115) eine Innenausnehmung (121), vorzugsweise als Innensechskant ausgebildet, aufweist.

13. Abreißkopfschraube nach Anspruch 12, dadurch gekennzeichnet, daß der Querschnitt der Innenausnehmung (121) des Kopfabschnitts (110) der Gewindehülse (115) größer ist als der Querschnitt der Innenausnehmung (123) des Kopfabschnitts (106), der mit dem Außengewindeabschnitt (105) verbunden ist.

14. Abreißkopfschraube nach Anspruch 12, dadurch gekennzeichnet, daß der Querschnitt der Innenausnehmung des Kopfabschnitts der Gewindehülse kleiner ist als der Querschnitt der Innenausnehmung des Kopfabschnitts, der mit dem Außengewindeabschnitt verbunden ist.

15. Abreißkopfschraube nach einem der Ansprüche 10 bis 14, dadurch gekennzeichnet, daß sie aus einer inneren Abreißkopfschraube (102) und einer äußeren Abreißkopfschraube (104) gebildet ist, die in Gewindeeingriff miteinander stehen.

16. Abreißkopfschraube nach einem der Ansprüche 1 bis 15, dadurch gekennzeichnet, daß die Gewindehülse (15, 115) einen unteren Anschlagbereich (19, 119) aufweist, der in drehbegrenzende Anlage an den Endabschnitt (9, 109) bringbar ist.

17. Verbindungselement, insbesondere Schraubverbinder bzw. Schraubkabelschuh, mit einem sich längs erstreckenden rohrförmigen Verbindungsgehäuse, das wenigstens an einer seiner Stirnseiten eine Öffnung für die Aufnahme eines länglichen zu verbindenden Elementes, insbesondere eines elektrischen Leiters, in das Verbindungsgehäuse aufweist, wobei in der Seitenwand des Gehäuses wenigstens eine Gewindeöffnung mit einer Klemmschraube vorgesehen ist
dadurch gekennzeichnet,
daß die Klemmschraube eine Abreißkopfschraube (1, 101) nach einem der Ansprüche 1 bis 16 ist.

## Claims

1. Bolt with shearable. head (1, 101) with an external thread section (15, 115), a head section (3, 106) and a taper section (7, 108) forming a predetermined breakage point (6, 118), provided for between the external thread section and the head section, as well as an end section providing a clamping contact (9, 109).
characterized in that
a threaded bush (15, 115) is provided, extending at least partly along the external thread section (5, 105) and having in turn an external thread (17, 120).

2. Bolt with shearable head according to claim 1, characterized in that the threaded bush (15) also extends around the radial outer circumference (21) of the end section (9).

3. Bolt with shearable head according to claim 1 or 2, characterized in that in the pre-assembled condition the threaded bush (15) is arranged on the external thread section (5) such that it is fixed or blocked in its turning movement.

4. Bolt with shearable head according to one of the claims 1 to 3, characterized in that the threaded bush (15) includes an inner limit stop shoulder (19).

5. Bolt with shearable head according to one of the claims 1 to 4, characterized in that on the end section of the threaded bush (15, 115) looking towards the head section (3, 110) a limit stop (16, 116) is provided.

6. Bolt with shearable head according to claim 5, characterized in that the limit stop is a cap-like shoulder (16, 116), protruding at least partly from the outer circumference of the external thread (17, 120) of the threaded bush (15, 115).

7. Bolt with shearable head according to one of claims 1 to 6, characterized in that there is an inner recess (11, 13) in the head section (5), in the taper section (7) and in the external thread section (5).

8. Bolt with shearable head according to claim 7, characterized in that the inner recess (11) is designed as hexagon socket.

9. Bolt with shearable head according to claim 7 or 8, characterized in that the cross section of the inner recess (11, 13) in the field of the external thread section (5) is lower than that in the field of the head section (3).

10. Bolt with shearable head according to at least one of the claims 1, 5 or 6, characterized in that the threaded bush (115) also includes a head section (110) and a taper section (117), arranged in between threaded bush (115) and head section (110).

11. Bolt with shearable head according to claim 10, characterized in that the head section (110) of the threaded bush (115) surrounds the head section (103), connected to the external thread section (105).

12. Bolt with shearable head according to claim 11, characterized in that the head section (110) of the threaded bush (115) includes an inner recess (121), preferably designed as hexagon socket.

13. Bolt with shearable head according to claim 12, characterized in that the cross section of the inner recess (121) of the head section (110) of the threaded bush (115) is larger than the cross section of the inner recess (123) of the head section (106), connected to the external thread section (105).

14. Bolt with shearable head according to claim 12, characterized in that the cross section of the inner recess of the head section of the threaded bush is smaller than the cross section of the inner recess of the head section, connected to the external thread section.

15. Bolt with shearable head according to one of the claims 10 to 14, characterized in that they are composed of an inner bolt with shearable head (102) and an outer bolt with shearable head (104), being in mesh with each other.

16. Bolt with shearable head according to one of the claims 1 to 15, characterized in that the threaded bush (15, 115) includes a lower limit stop (19, 119), which may take bearing on the end section (9, 109), the turning movement being blocked.

17. Connecting element, in particular screw connector and/or screwed cable lug, with a longitudinal tube-like connection housing, having at least on one of its face sides an opening for receiving a longitudinal element to be connected, in particular an electrical conductor, in the connection housing, having at least one thread opening with a clamping screw in the side wall of the housing
characterized in that
the clamping screw is a bolt with shearable head (1, 101) according to one of the claims 1 to 16.

## Revendications

1. Vis à tête frangible (1, 101) présentant une partie à filetage extérieur (15, 115), une partie formant tête (3, 106) et une partie rétrécie (7, 108) constituant un point de rupture théorique (6, 118), qui est prévue entre la partie à filetage extérieur et la partie formant tête, ainsi qu'une partie formant extrémité (9, 109) permettant un contact bloquant,
caractérisée en ce qu'est prévue une douille filetée (15, 115), qui s'étend, au moins partiellement, le long de la partie à filetage extérieur (5, 105) et présente, pour sa part, un filetage extérieur (17, 120).

2. Vis à tête frangible selon la revendication 1, caractérisée en ce que la douille filetée (15) s'étend également sur le pourtour radialement extérieur (21) de la partie formant tête (9).

3. Vis à tête frangible selon la revendication 1 ou 2, caractérisée en ce qu'à l'état prémonté, la douille filetée (15) est montée de façon liée ou bloquée en rotation sur la partie à filetage extérieur (5).

4. Vis à tête frangible selon l'une des revendications 1 à 3, caractérisée en ce que la douille filetée (15) présente un épaulement de butée (19) intérieur.

5. Vis à tête frangible selon l'une des revendications 1 à 4, caractérisée en ce qu'un dispositif de butée (16, 116) est prévu sur la zone terminale de la douille filetée (15, 115) qui est orientée en direction de la partie formant tête (3, 110).

6. Vis à tête frangible selon la revendication 5, caractérisée en ce que le dispositif de butée est une saillie (16, 116) du type capuchon, qui dépasse, au moins partiellement, du pourtour extérieur du filetage extérieur (17, 120) de la douille filetée (15, 115).

7. Vis à tête frangible selon l'une des revendications 1 à 6, caractérisée en ce qu'est formé un évidement intérieur (11, 13) dans la partie formant tête (3), dans la partie rétrécie (7) et dans la partie à filetage extérieur (5).

8. Vis à tête frangible selon la revendication 7, caractérisée en ce que l'évidement intérieur (11) est conformé en six pans creux.

9. Vis à tête frangible selon la revendication 7 ou 8, caractérisée en ce que la section de l'évidement intérieur (11, 13), dans la zone de la partie à filetage extérieur (5), est plus réduite que dans la zone de la partie formant tête (3).

10. Vis à tête frangible selon au moins l'une des revendications 1, 5 ou 6, caractérisée en ce que la douille filetée (115) présente également une partie formant tête (110) et une partie rétrécie (117), qui est prévue entre la douille filetée (115) et la partie formant tête (110).

11. Vis à tête frangible selon la revendication 10, caractérisée en ce que la partie formant tête (110) de la douille filetée (115) entoure la partie formant tête (103) qui est reliée avec la partie à filetage extérieur (105).

12. Vis à tête frangible selon la revendication 11, caractérisée en ce que la partie formant tête (110) de la douille filetée (115) présente un évidement intérieur (121), conformé de préférence en six pans creux.

13. Vis à tête frangible selon la revendication 12, caractérisée en ce que la section de l'évidement intérieur (121) de la partie formant tête (110) de la douille filetée (115) est plus grande que la section de l'évidement intérieur (123) de la partie formant tête (106), qui est reliée avec la partie à filetage extérieur (105).

14. Vis à tête frangible selon la revendication 12, caractérisée en ce que la section de l'évidement intérieur de la partie formant tête de la douille filetée est plus petite que la section de l'évidement intérieur de la partie formant tête, qui est reliée avec la partie à filetage extérieur.

15. Vis à tête frangible selon l'une des revendications 10 à 14, caractérisée en ce qu'elle est formée par une vis à tête frangible intérieure (102) et par une vis à tête frangible extérieure (104), qui coopèrent par filetage.

16. Vis à tête frangible selon l'une des revendications 1 à 15, caractérisée en ce que la douille filetée (15, 115) présente une partie de butée (19, 119) inférieure, qui est susceptible de venir s'appuyer contre la partie formant extrémité (9, 109) pour en limiter la rotation.

17. Raccord, en particulier raccord fileté ou cosse de câble filetée, comportant un boîtier de raccord tubulaire s'étendant longitudinalement, qui présente, au moins sur l'une de ses faces frontales, une ouverture destinée à loger un élément allongé à raccorder, en particulier un conducteur d'électricité, dans le boîtier de raccord, au moins une ouverture filetée équipée d'une vis de blocage étant prévue dans la paroi latérale du boîtier,
caractérisé en ce que la vis de blocage est une vis à tête frangible (1, 101) selon l'une des revendications 1 à 16.
